# EUROPEAN PATENT SPECIFICATION

(11) **EP 2 762 305 B1**
(45) Date of publication and mention of the grant of the patent: **16.12.2015**
(21) Application number: 13153401.8
(22) Date of filing: 31.01.2013
(51) Int. Cl.: B32B 21/13, B32B 21/14, E04B 5/02, E04B 5/16, B27M 3/04, E04C 2/24, B27D 1/04

(54) **PLYWOOD**
SPERRHOLZ
CONTREPLAQUÉ

(43) Date of publication of application: 06.08.2014
(73) Proprietor: UPM-Kymmene Wood Oy, 15140 Lahti (FI)
(72) Inventor: Marttila, Pasi, 15540 Villähde (FI)
(74) Representative: Kolster Oy Ab

(56) References cited:
- EP-A1- 0 814 013
- US-A1- 2009 169 880
- DATABASE WPI Week 199339 Thomson Scientific, London, GB; AN 1993-309642 XP002697730, -& JP H05 222802 A (SUMITOMO FORESTRY CO LTD) 31 August 1993 (1993-08-31)

## Description

### FIELD OF THE INVENTION

The present invention relates to plywood.

### BRIEF DESCRIPTION OF THE INVENTION

The invention is characterized by the features of the independent claims.

According to an embodiment, plywood comprises a top surface and a bottom surface and has a primary main direction and a secondary main direction in the plane of the surfaces, the secondary main direction being perpendicular to the primary main direction, and wherein at least the top surface is coated with a coating material and wherein at least in the top surface of the plywood a friction coefficient of the surface in the primary main direction is at least 1.2 times a friction coefficient of the surface in the secondary main direction.

According to an embodiment of the plywood, the friction coefficient of the top surface in the primary main direction is at most 5 times the friction coefficient of the top surface in the secondary main direction.

According to an embodiment of the plywood, the friction coefficient of the top surface in the primary main direction is at least 1.3 times the friction coefficient of the top surface in the secondary main direction and at most 4 times the friction coefficient of the top surface in the secondary main direction.

According to an embodiment of the plywood, the friction coefficient of the top surface in the primary main direction is at least 0.50 or at least 0.60.

According to an embodiment of the plywood, the friction coefficient of the top surface in the primary main direction is at least 0.40 and the friction coefficient of the top surface in the secondary main direction is at least 0.20.

According to an embodiment of the plywood, at least the top surface of the plywood comprises frictional particles comprising edges of different areas spread on the top surface, the frictional particles being oriented to have edges with larger areas facing towards the primary main direction of the plywood.

According to an embodiment of the plywood, the frictional particles are electrostatically chargeable particles or at least partly magnetic particles.

According to an embodiment of the plywood, the thickness of the plywood is at least 8 millimetres.

According to an embodiment of the plywood, the bottom surface of the plywood is coated with a coating material similar to the coating material on the top surface of the plywood.

According to an embodiment of a method for manufacturing plywood comprising a top surface and a bottom surface, the plywood having a primary main direction and a secondary main direction in the plane of the surfaces, the secondary main direction being perpendicular to the primary main direction, the method comprises laying veneers of wood material on top of the other for providing a number of successive veneer layers, each veneer layer comprising at least one veneer, applying an adhesive between the veneer layers, applying a coating material on at least the top surface of the plywood, and pressing the veneer layers together, wherein at least the top surface of the plywood is provided to have in the primary main direction a friction coefficient of at least 1.2 times a friction coefficient of the top surface in the secondary main direction.

According to an embodiment of the method for manufacturing plywood, the top surface of the plywood is provided to have in the primary main direction the friction coefficient of at most 5 times the friction coefficient of the top surface in the secondary main direction.

According to an embodiment of the method for manufacturing plywood, the top surface of the plywood is provided to have the friction coefficient of one of at least 0.50 and at least 0.60 in the primary main direction and the friction coefficient of at least 0.40 in the secondary main direction.

According to an embodiment of the method for manufacturing plywood, frictional particles comprising edges of different areas are spread on the top surface of the plywood and the frictional particles are oriented to have edges with larger areas facing towards the primary main direction of the plywood.

According to an embodiment of the method for manufacturing plywood the frictional particles are at least partly magnetical particles and the at least partly magnetical particles are subjected to an effect of a magnetic field for orienting the edges with larger areas to face towards the primary main direction of the plywood.

According to an embodiment of a freight transport means or a freight transport unit of a freight transport means, the freight transport means or the freight transport unit of the freight transport means comprises at least one cargo space provided with a flooring, the flooring comprising at least one plywood board made of plywood according to any one of claims 1 to 9.

According to an embodiment of a loading arrangement of a freight transport means or a freight transport unit of the freight transport means, the loading arrangement comprises a freight transport means or a freight transport unit of a freight transport means comprising at least one cargo space provided with a flooring, the flooring comprising at least one plywood board made of plywood according to any one of claims 1 to 9, a cargo loaded on the flooring in the cargo space and load binders for supporting the cargo in the cargo space after tightening the load binders in connection with the cargo, wherein the load binders are arranged to run substantially in the secondary main direction of the plywood when tightened to support the cargo loaded in the cargo space.

According to an embodiment of a flooring for a cargo space of a freight transport means or a freight transport unit of the freight transport means the flooring is to be fastened to a frame structure of the freight transport means or the freight transport unit of the freight transport means, wherein the flooring comprises at least one plywood board made of plywood according to any one of claims 1 to 9.

Herein, the freight transport means refers to any freight transport means which may be used for transporting loads or cargoes from one place to another either by rail or by road and which comprises at least one cargo space for receiving cargo to be transported and which freight transport means comprises power generation and transmission means such that the freight transport means may move without external devices for power source and transmission.

Herein, the freight transport unit of a freight transport means refers to a freight transport unit intended to be used in sea, rail or road transportation and which comprises a cargo space for receiving cargo to be transported and which may be either loaded into a cargo space of the freight transport means or coupled or connected to the freight transport means such that the freight transport unit forms a part of the freight transport means when coupled or connected to the freight transport means.

The freight transport means may be a lorry or a trailer lorry used in road transport. When the freight transport means is a lorry, the cargo space of the freight transport means may be an open platform comprising a floor provided with or without walls and constructed fixedly onto the chassis of the lorry, whereby the floor and possible walls define the cargo space of the lorry. The cargo space of the lorry may also be an open platform provided with or without walls and coupled fixedly to the chassis of the lorry or an open platform provided with or without walls and coupled detachably to the chassis of the lorry. The cargo space of the lorry may also be a closed platform provided with walls and a roof and constructed fixedly onto the chassis of the lorry or a closed container coupled fixedly or detachably to the chassis of the lorry, whereby the floor, walls and roof of the platform or container define the cargo space of the lorry.

When the freight transport means is a trailer lorry comprising a drawing vehicle and at least one trailer, the drawing vehicle forms the drawing unit of the freight transport means and the trailer forms the freight transport unit of the freight transport means. The trailer lorry may be a semitrailer combination truck, a full trailer combination truck or some other kind of trailer lorry comprising at least one drawing vehicle and at least one trailer. The drawing vehicle may or may not comprise a cargo space. If the drawing vehicle comprises a cargo space, the cargo space may be implemented as explained above in connection with the lorry. The trailer of the lorry may be an open trailer comprising a floor and provided with or without walls, or a closed trailer comprising a floor, side and end walls and a roof, whereby the floor and possible walls and roof define the cargo space of the trailer.

When the freight transport means is a lorry or a trailer lorry, the freight transport unit of the freight transport means may also be an open demountable platform comprising a floor and provided with or without walls, which platform may be coupled to a lorry or a trailer by placing it onto the chassis of the lorry or trailer and locked to the lorry or trailer either detachably or fixedly. The freight transport unit of the freight transport means may also be a closed freight container, which may be coupled to a lorry or a trailer by placing it onto the chassis of the lorry or the trailer and locked to the lorry or trailer either detachably or fixedly.

The freight transport means may also be a van, a pickup van or a similar vehicle.

The freight transport means may also be a train comprising at least one locomotive and a number of railway wagons, whereby the locomotive and the railway wagons coupled to the locomotive form the freight transport means, the locomotive forming a drawing unit of the freight transport means and each railway wagon individually forming a single freight transport unit of the freight transport means and comprising a cargo space for receiving cargo. The bottom of the wagon provides the floor of the cargo space of the wagon. The wagon may also comprise side and/or end walls and a roof, which in such a case also contribute to defining the cargo space of the wagon.

The freight transport unit of the freight transport means may also be a shipping container comprising a floor, side and end walls as well as a roof for providing a closed cargo space of the freight transport unit.

### BRIEF DESCRIPTION OF THE DRAWINGS

In the following, the invention will be described in greater detail by means of preferred embodiments with reference to the attached drawings, in which
Figure 1 schematically shows a side view of a plywood board;
Figure 2 schematically shows an example of a definition of main directions of plywood;
Figure 3 schematically shows a top view of a plywood board;
Figure 4 schematically shows an example relating to manufacture of plywood;
Figure 5 schematically shows a side view of a freight transport means and a freight transport unit of a freight transport means;
Figure 6 schematically shows a top view of the freight transport unit of the freight transport means of Figure 5, and
Figure 7 schematically shows a top view of a loaded freight transport unit of the freight transport means of Figures 5 and 6.

### DETAILED DESCRIPTION OF THE INVENTION

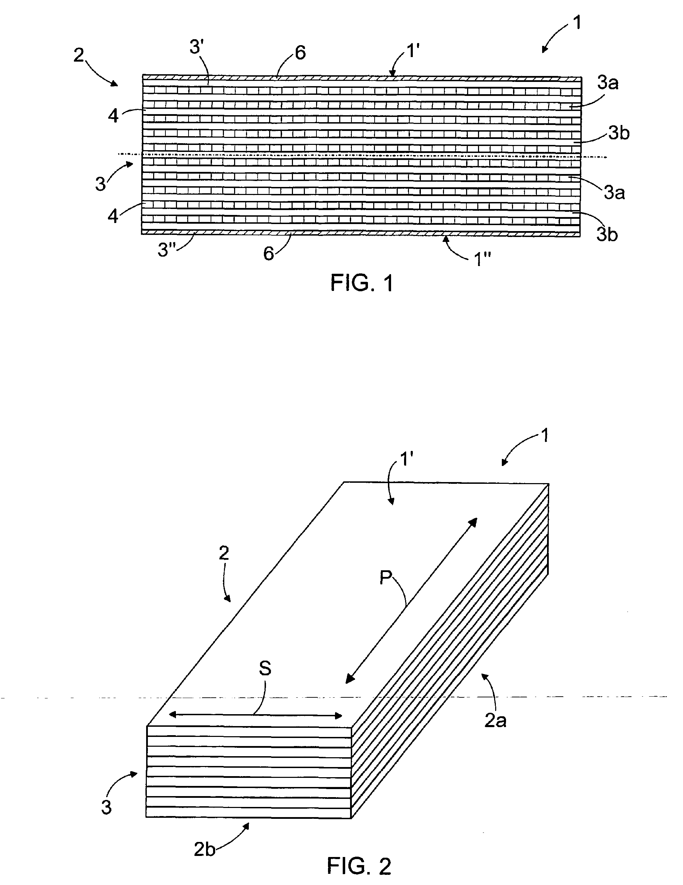

Figure 1 shows schematically a side view of a general structure of plywood 1, in a shape or a form of a plywood board 2. The plywood 1 comprises a number of veneer layers 3 formed of veneers 4 or plies 4 stacked on top of the other and glued together with an adhesive, such as phenol resin. The plywood 1 of Figure 1 comprises nineteen veneer layers 3 but the number of veneer layers 3 in the plywood 1 may vary in many ways, depending on the intended use of the plywood 1 for example. Each veneer layer 3 of the plywood 1 may comprise one or more adjacent veneers 4. For the sake of clarity, in the embodiment of Figure 1 each veneer layer 3 comprises only one veneer 4.

The veneer 4 is a sheet of wood material, which may be manufactured from a billet of wood material by rotary cut, quarter slicing, lengthwise slicing, plain slicing, half-round slicing or rift cut, for example. In rotary cut, a log is centered on a lathe and turned against a broad cutting knife set into the log at a slight angle. In quarter slicing, the slicing is made perpendicularly to the annual growth rings of the tree. Lengthwise slicing is typically made from a board of flat sawn. Plain slicing is made by slicing the log parallel to the centre of the log. In half-round slicing, the slicing is made on an arc parallel to the centre of the log. The rift cut, in turn, is a straight grain cut method which is provided by slicing the tree at a slight angle to minimize irregularities in the wood.

The plywood 1 has a top surface 1' or a first surface 1' provided by a top surface veneer layer 3' or a top veneer layer 3'. The plywood 1 has also a bottom surface 1" or a second surface 1" provided by a bottom surface veneer layer 3" or a bottom veneer layer 3". The veneers 4 in different veneer layers 3 are laid in the plywood 1 in such a way that the grain direction in some veneer layers 3 of the plywood 1 is crosswise to the grain direction of the veneers 4 in some other veneer layers 3. In Figure 1, the veneer layers 3 having the grains of the veneers being directed perpendicularly to the plane of the paper are indicated by reference number 3a and the veneer layers 3 having the grains of the veneers being directed in the direction of the plane of the paper are indicated by reference number 3b. In the embodiment of Figure 1, the veneers 4 are arranged in such a way that the grain direction of the veneers 4 in each veneer layer 3 is crosswise to the grain direction of the veneers 4 in the adjacent veneer layers 3. The plywood 1 may, however, be constructed in such a way that there are some veneer layers 3 wherein the grain direction in the adjacent veneer layers 3 is the same. A centre line of the plywood 1 is indicated in Figure 1.

The top surface 1' of the plywood 1 is coated with a coating material. The bottom surface 1" of the plywood 1, may also be coated with a coating material. The coating material may, for example, be phenol resin, polyphenol or polyamide. The coating material may be applied to the top 1' and bottom 1" surfaces of the plywood 1 before pressing the veneer layers 3 together. A layer 6 of coating material is shown schematically in Figure 1 at outer surfaces of the top surface veneer layer 3' and the bottom surface veneer layer 3". The top surface 1' of the plywood 1 may also be provided with a surface profiling for providing the surface of the plywood 1 with some anti-slip properties. For the sake of clarity, no surface profiling is shown in Figure 1.

After completing the manufacture of the plywood 1, it typically has the form of a rectangular board with a certain width and a certain length, which may vary, depending on the manufacturing line. The direction of sides 2a, 2b of the plywood board 2 in the plane of the top 1' and bottom 1" surfaces of the plywood 1 may define the main directions of the plywood 1. In the example of Figure 2, the direction of the longitudinal side 2a of the plywood board 2 is determined to correspond to a primary main direction P of the plywood 1, and the direction of the side 2b of the plywood board 2 in the lateral direction of the plywood board 2 is determined to correspond to a secondary main direction S of the plywood 1, the secondary main direction S of the plywood 1 thus being perpendicular to the primary main direction P of the plywood 1. The definition of the primary main direction P and secondary main direction S of the plywood 1 could, however, be also vice versa. In the context of this specification, it may be assumed below that the definitions of the primary main direction P and secondary main direction S remain the same even if the plywood having the shape or form of the plywood board 2 were cut into smaller pieces which may also have a shape or form different from the shape or form of a rectangle.

According to an embodiment of the plywood 1, the top surface 1' of the plywood 1 is coated with a coating material and the top surface 1' of the plywood 1 is provided with frictional properties in such a way that a friction coefficient of the top surface 1' in the primary main direction P of the plywood 1 is at least 1.2 times a friction coefficient of the first surface 1' in the secondary main direction S of the plywood 1. The friction coefficient of the first surface 1' of the plywood 1 is thus different in one main direction of the plywood 1 than in the other main direction of the plywood 1 in such a way that the friction coefficient of the first surface 1' is higher in the primary main direction P of the plywood 1 than in the secondary main direction S of the plywood 1 in such a way that the friction coefficient of the first surface 1' of the plywood 1 in the primary main direction P of the plywood 1 is at least 1.2 times the friction coefficient of the first surface 1' of the plywood 1 in the secondary main direction S of the plywood 1.

According to an embodiment of the plywood 1, the top surface 1' of the plywood 1 is coated with the coating material and the friction coefficient of the top surface 1' in the primary main direction P is at least 1.2 times the friction coefficient of the first surface 1' of the plywood 1 in the secondary main direction S of the plywood 1 and at most 5 times the friction coefficient of the top surface 1' in the secondary main direction S.

According to an embodiment of the plywood 1, the top surface 1' of the plywood 1 is coated with the coating material and the friction coefficient of the top surface 1' in the primary main direction P is at least 1.3 times the friction coefficient of the top surface 1' in the secondary main direction S.

According to an embodiment of the plywood 1, the top surface 1' of the plywood 1 is coated with the coating material and the friction coefficient of the top surface 1' in the primary main direction P is at least 1.3 times the friction coefficient of the top surface 1' in the secondary main direction S and at most 4 times the friction coefficient of the top surface 1' in the secondary main direction S.

According to an embodiment of the plywood 1, the top surface 1' of the plywood 1 is coated with the coating material and the friction coefficient of the top surface 1' in the primary main direction P is at least 1.5 times the friction coefficient of the top surface 1' in the secondary main direction S.

According to an embodiment of the plywood 1, the top surface 1' of the plywood 1 is coated with the coating material and the friction coefficient of the top surface 1' in the primary main direction P is at least 1.5 times the friction coefficient of the top surface 1' in the secondary main direction S and at most 3 times the friction coefficient of the top surface 1' in the secondary main direction S.

According to an embodiment of the plywood 1, the top surface 1' of the plywood 1 is coated with the coating material and the friction coefficient of the top surface 1' in the primary main direction P is at least 0.50 or at least 0.60.

According to an embodiment of the plywood 1, the top surface 1' of the plywood 1 is coated with the coating material and the friction coefficient of the top surface 1' in the primary main direction P is at most 0.70 or at most 0.80.

According to an embodiment of the plywood 1, the top surface 1' of the plywood 1 is coated with the coating material and the friction coefficient of the top surface 1' in the secondary main direction S is at least 0.10, at least 0.12, at least 0.14, at least 0.20 or at least 0.40.

According to an embodiment of the plywood 1, the top surface 1' of the plywood 1 is coated with the coating material and the friction coefficient of the top surface 1' in the secondary main direction S is at most 0.50.

According to an embodiment of the plywood 1, the top surface 1' of the plywood 1 is coated with the coating material and the friction coefficient of the top surface 1' in the primary main direction P is at least 0.40 and the friction coefficient of the top surface 1' in the secondary main direction S is at least 0.20.

According to an embodiment of the plywood 1, the top surface 1' of the plywood 1 is coated with the coating material and the friction coefficient of the top surface 1' in the primary main direction P is 0.67 and the friction coefficient of the top surface 1' in the secondary main direction S is 0.20.

The frictional properties of the first surface of the plywood in the primary and secondary main directions of the plywood as described above, as well as the specific friction coefficient values in the primary and secondary main directions of the plywood as described above, refer to the frictional properties and friction coefficient values corresponding to static friction properties or static friction coefficient values of the surface of the plywood.

In the examples below, only the top surface 1' of the plywood 1 is provided with different frictional properties in different main directions of the surface but the same kind of frictional properties may also be provided in the bottom surface 1" of the plywood 1.

Generally, when considering frictional properties of a surface, the frictional properties or a friction coefficient of the surface is determined in respect of a counterpart laid on the surface. When considering the frictional properties of the top surface 1' of the plywood 1 as described above, the frictional properties or the friction coefficients as disclosed above are determined in respect of a piece of wood material being as the counterpart against the top surface 1' of the plywood 1. The piece of wood material may be for example a loading pallet made of wood, such as spruce or pine.

The plywood 1 having different frictional properties in the different main directions P, S of the plywood 1 may be utilized in applications wherein it is necessary to have good frictional properties in a specified direction but it is allowed or it may be advantageous to have lower frictional properties in another direction. One possible application for this kind of plywood is in a flooring of a freight transport means or in a flooring of a freight transport unit of a freight transport means to be discussed in more detail below.

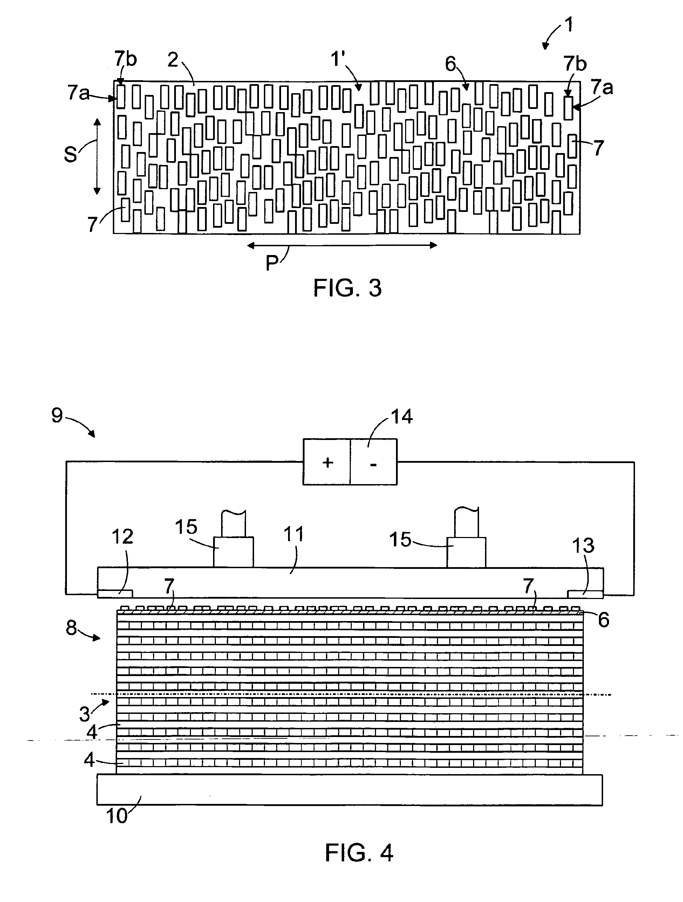

An embodiment of the plywood 1 comprising different frictional properties on the top surface 1' of the plywood 1 in the primary main direction P than in the secondary main direction S is shown schematically in Figure 3, wherein the plywood 1, having the form of the plywood board 2, is shown schematically from above. The plywood 1 of Figure 3 comprises a layer 6 of coating material on the top surface 1' of the plywood 1. The plywood 1 of Figure 3 further comprises a number of frictional particles 7 spread on the top surface 1' of the plywood 1. The frictional particles 7 comprise a first edge 7a and a second edge 7b, the first edge 7a and the second edge 7b being at least partly perpendicular to the plane of the top surface 1' of the plywood 1 in the embodiment of Figure 3. In the embodiment of Figure 3, the frictional particles 7 have a substantially rectangular shape or form in such a way that the first edge 7a has a greater length than the second edge 7b, whereby, when the frictional particle 7 is substantially flat, the area of the first edge 7a is larger than the area of the second edge 7b. In the embodiment of Figure 3, the length of the first edge 7a is about three times that of the second edge 7b, whereby the area of the first edge 7a is about three times that of the second edge 7b.

In the embodiment of Figure 3, the frictional particles 7 are oriented or directed in such a way that the first edges 7a of the frictional particles face towards the primary main direction P of the plywood 1 and the second edges 7b of the frictional particles 7 face towards the secondary main direction S of the plywood 1. Because the areas of the first edges 7a of the frictional particles 7 are larger than the areas of the second edges 7b, the frictional particles 7 provide a higher frictional effect or higher friction coefficient in the primary main direction P of the plywood 1 than in the secondary main direction S relative to a counterpart to be laid on the top surface 1' of the plywood 1. Because in the embodiment of Figure 3 the area of the first edge 7a is about three times that of the second edge 7b, when the frictional particles are assumed to be substantially flat, as stated above, the frictional effect of the friction coefficient of the top surface 1' of the plywood 1 is about three times higher in the primary main direction P of the plywood 1 than in the secondary main direction S of the plywood 1. In the example of Figure 3, the size of the frictional particles 7 is greatly exaggerated relative to the size of the plywood board 2, if it is assumed that the plywood board 2 of Figure 3 represents the plywood board 2 just after completing the manufacture of the plywood 1.

In the embodiment of Figure 3, the frictional particles 7 have a substantially rectangular and flat shape or form but the shape and size of the frictional particles 7 may vary in many ways. Despite the shape and size of the frictional particles 7, edges of the frictional particles 7 having larger areas are directed or oriented to face towards the primary main direction P while edges of the frictional particles 7 having smaller areas are directed or oriented to face towards the secondary main direction S, whereby the frictional effect or the friction coefficient of the top surface 1' of the plywood 1 is higher in the primary main direction P than in the secondary main direction S.

The length of the edges of the frictional particles 7 may be for example 0.001 to 5.0 mm. In very small particles the length of the edge of the particle may be 0.001 to 0.9 mm, for example, and in larger particles 1.0 to 5.0 mm.

According to an embodiment, the frictional particles 7 are electrostatically chargeable particles, whereby the orientation of the frictional particles 7 may be provided by subjecting the frictional particles 7 spread on the top surface 1' of the plywood 1 to an influence of an electric field. The frictional particles 7 may be made of inorganic material comprising positively or negatively charged ions. An example of using an electric field for orienting frictional particles in connection with the manufacture of plywood is shown schematically in Figure 4 and explained in more detail next.

Figure 4 shows schematically a side view of plywood 1, in the form of a plywood blank 8 supplied into a hot press 9 between a lower press plate 10 and an upper press plate 11 for pressing the veneer layers 3 of the plywood blank 8 together. Before supplying the plywood blank 8 into the hot press 9, the plywood blank 8 has been built up outside the hot press 9. The plywood blank 8, and thereby the plywood 1, is manufactured by laying veneers 4 of selected wood material on top of the other such that successive veneer layers 3 are provided. Each veneer layer 3 of the plywood blank 8 comprises one or more adjacent veneers 4. Before laying the veneers on top of the other for forming the plywood blank 8, veneers have been manufactured from a billet of wood material and dried. Also possible grading cutting may have been applied to wet veneers before drying the veneers. If a veneer layer 3 comprises two or more adjacent veneers 4, the veneers 4 are typically joined together before the veneers are laid on top of the other for providing the plywood blank 8.

When the veneers 4 are laid on top of the other, an adhesive is applied between the veneer layers 3. Typically, an adhesive is applied between the veneer layers 3 in such a way that the adhesive is applied to at least one surface of the veneer 4 just before the veneer 4 is laid on top of the previous veneer layer 3 in the plywood blank 8. The adhesive may be supplied either in liquid form or as impregnated into a carrier sheet, which may be for example a sheet of paper. After a predetermined number of veneer layers 3 are arranged in the plywood blank 8, a coating material may be applied either only to the top surface 1' of the plywood 1 or both to the top 1' and bottom 1" surfaces of the plywood 1, whereby a layer 6 of coating material is applied to the respective surface(s) of the plywood blank 8.

After the application of the coating material to the top surface 1' of the plywood blank 8, frictional particles 7 are spread on the top surface 1' of the plywood blank 8. Alternatively the frictional particles 7 could be mixed beforehand with the coating material of liquid form to be applied to the top surface 1' of the plywood blank 8, whereby the frictional particles 7 are spread onto the top surface 1' of the plywood 1 when the coating material is applied to the top surface 1' of the plywood blank 8.

After the previous manufacturing steps of the plywood 1, the plywood blank 8 is supplied into the hot press 9 between the press plates 10 and 11. After the plywood blank 8 has been supplied into the hot press 9, an electrical field is created on the top part of the hot press 9 for providing the orientation or direction of the electrostatically chargeable frictional particles 7. The electric field may be created on the top part of the hot press 9 by providing ends of the upper press plate 11 with electrodes 12 and 13 connected to positive and negative poles of a voltage source 14. This provides an electric field affecting between the upper press plate 11 and the top surface 1' of the plywood blank 8, the electric field affecting the electrostatically chargeable frictional particles 7 in such a way that, when considering the embodiment of Figure 3, the first edges 7a of the friction particles 7 having a larger area than the area of the second edges 7b face towards the primary main direction P of the plywood 1.

Instead of using electrodes 12 and 13 for creating the electric field between the ends of the upper press plate 11, the positive and negative poles of a voltage source 14 may be connected directly to the ends of the upper press plate 11 if the construction and manufacturing material of the upper press plate 11 allows an electric field affecting between the ends of the upper press plate 11 to be generated.

After the frictional particles 7 have been oriented through the influence of the electric field, the plywood blank 8 is pressed by pressing the press plates 10, 11 of the hot press 9 towards each other for example by supplying a pressure medium, such as hydraulic oil, to cylinders 15 coupled to the upper press plate 11. The upper press plate 11 then moves towards the lower press plate 10, whereby the veneer layers 3 in the plywood blank 8 are pressed together. The temperature in the press 11 may be for example be 110 to 210 °C and the pressure may be for example 0.5 to 3.0 MPa. The total press time may be for example 0.5 to 35 minutes, for example 30 minutes, depending on the coating material, for example. The electric field used to orient the frictional particles 7 is maintained at least at the beginning of the pressing step so that the orientation of the frictional particles is maintained as desired until the coating material on the top surface 1' of the plywood blank 8 is dry enough to keep the frictional particles immobile. After the pressing step is completed, the hot press 9 is opened and the plywood blank 8 may be removed from the hot press 9 for further processing, such as for cutting the plywood blank 8 into plywood boards 2 having a suitable size.

According to an embodiment, the frictional particles 7 are at least partly magnetic particles, whereby the orientation of the frictional particles may be provided by subjecting the frictional particles 7 scattered on the top surface 2' of the plywood board 2 to an influence of a magnetic field created between the upper press plate and the top surface of the plywood blank. The frictional particles may for example be made of a material being magnetically hard, such as iron or steel, for example. When the frictional particles 7 are at least partly magnetic particles, whereby the frictional particles are oriented by subjecting the frictional particles 7 to the influence of the magnetic field, whereby the electrodes 12 and 13 in the example of Figure 4 may be replaced with an element providing the magnetic field when connected to the voltage source 14.

In the examples above, frictional particles 7 were used to provide different frictional properties in different directions of the surface of the plywood. Alternatively, a specific surface profiling having the form resembling an imbricate structure, for example, may be applied to the surface of the plywood, for example by means of a form panel. A surface profiling having the form of an imbricate structure may also be provided by the frictional particles 7. Alternatively, the surface of the plywood may also be sanded at some manufacturing stage of the plywood for providing different frictional properties in different directions of the surface of the plywood.

According to an embodiment, the thickness of the plywood 1 or the plywood board 2 is at least 8 mm. The greater the thickness of the plywood 1 or the plywood board 2, the higher the resistance of the plywood structure itself against possible warping or twisting caused by possible expansion or construction effects in the top surface 1' of the plywood 1 originating from expansion or construction phenomena of the coating material and frictional particles 7 on the top surface 1 of the plywood 1 when temperature and moisture conditions in the operating environment vary.

The thickness of the plywood 1 or the plywood board 2 is at least 8 mm, preferably at least 15 mm, and more preferably at least 20 mm. The thickness of the plywood 1 or the plywood board 2 is at most 35 mm or preferably at most 30 mm. In light freight transport means or freight transport units of the freight transport means, such as vans, wherein the plywood boards 2 do not typically participate in the stiffening of the construction of the freight transport means or the freight transport units of the freight transport means, the thickness of the plywood boards 2 may be for example 8 to 15 mm. In heavy freight transport means or freight transport units of the freight transport means, such as trailers, wherein the plywood boards 2 may participate in the stiffening of the construction of the freight transport means or the freight transport units of the freight transport means, the thickness of the plywood boards 2 may be for example 15 to 35 mm, preferably 20 to 30 mm.

According to an embodiment, both the top surface 1' of the plywood 1 and the bottom surface 1 " of the plywood 1 are coated with the coating material. The coating material applied to the bottom surface 1" of the plywood 1 provides a moisture barrier when the plywood boards 2 made of plywood 1 are used in a flooring of a cargo space of a freight transport means or a freight transport unit of a freight transport means. The coating material applied to the bottom surface 1" of the plywood 1 prevents or reduces possible warping or twisting of the plywood 1 caused by possible expansion or construction effects in the top surface 1' of the plywood 1 originating from expansion or construction phenomena of the coating material and frictional particles 7 on the top surface 1 of the plywood 1 when temperature and moisture conditions in the operating environment vary. If the coating material on the bottom surface 1" of the plywood 1 is the same as that on the top surface 1' of the plywood 1, possible expansion or construction phenomena in the top surface 1' of the plywood 1 and the bottom surface 1" of the plywood 1' originating from the coating material are substantially the same, thus preventing or reducing possible warping or twisting of the plywood 1 in varying environmental conditions.

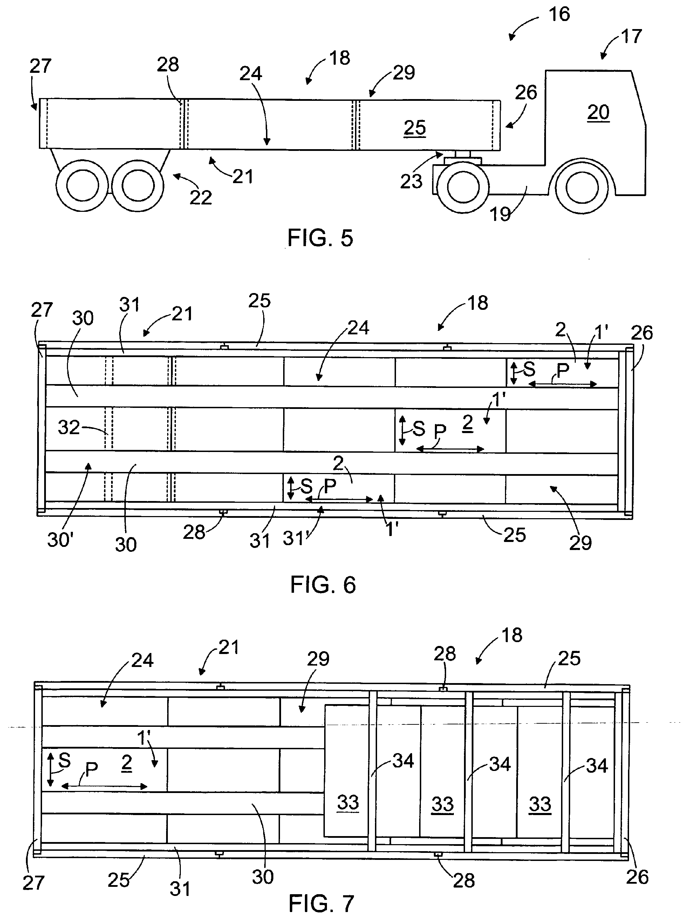

Figure 5 shows schematically a side view of a freight transport means 16 intended for road transport for carrying loads or cargoes from one place to another. The freight transport means 16 comprises a lorry 17 and a trailer 18, which is detachably coupled to the lorry 17. The trailer 18 provides a kind of a freight transport unit of the freight transport means 16 and the lorry 17 provides a kind of a drawing vehicle or a drawing unit of the freight transport means 16.

The lorry 17 comprises a chassis 19 and a driver's cab 20. The trailer 18 comprises a frame structure 21 to which a bogie unit 22 is attached, as well as coupling means 23 for coupling the trailer 18 to the lorry 17. The trailer 18 further comprises a flooring 24 fastened to the frame structure 21, as well as sideboards 25, a facing board 26 and a backboard 27. When the trailer 18 is in use, the sideboards 25, the facing board 26 and the backboard 27 may be supported against support beams 28 denoted in broken lines. The sideboards 25 provide sidewalls of the trailer 18, and the facing board 26 and the backboard 27 provide a front wall and a back wall of the trailer 18. The flooring 24, the sideboards 25, the facing board 26, and the backboard 27 together contribute to defining a cargo space 29 of the trailer 18 of Figure 5. The trailer 18 may also comprise a tarpaulin which provides the roof of the trailer 18, and it may also provide part of the sidewalls, the front wall and the back wall of the trailer. For the sake of clarity, no tarpaulin is shown in Figure 5.

Figure 6 shows schematically a top view of the trailer 18 of Figure 5. The frame structure 21 of the trailer 18 according to Figures 5 and 6 comprises two longitudinal main beams 30 having a top surface 30' and two longitudinal side beams 31 having a top surface 31', as well as transverse frame beams 32, Figure 6 representing only some of the transverse frame beams 32 in broken lines. The longitudinal frame beams 30, the longitudinal side beams 31 and the transverse frame beams 32 may be welded to each other.

Figure 6 further shows plywood boards 2, which are attached to the frame structure 21 of the trailer 18 for providing the flooring 24 of the cargo space 29 of the trailer 18, whereby the frame structure 21 of the trailer 18 and the plywood boards 2 together provide the floor structure of the cargo space 29. The plywood boards 2 may for example be those explained in connection with Figure 3. In the embodiment of Figure 6, the upper surfaces 30' of the longitudinal main beams 30 are left visible but in an alternative embodiment also the upper surfaces 30' of the longitudinal main beams 30 could be covered by the plywood boards 2.

In the embodiment of Figure 6, the plywood boards 2 are arranged in the flooring 24 of the cargo space 29 in such a way that the top surface 1' of the plywood boards 2 face towards the cargo space 29 and the primary main direction P of the plywood boards 2 substantially coincides with the longitudinal direction of the trailer 18, which is also the main movement direction of the trailer 18 in use. In the main movement direction of the trailer 18, especially during fast accelerations or braking actions, a cargo loaded in the cargo space 29 is subjected to high forces which tend to cause the cargo to move or slide along the flooring 24, especially because a reliable fastening of the cargo with load binders is typically extremely difficult or totally impossible in the longitudinal direction of the trailer 18, especially in long trailers. At the same time the secondary main direction S of the plywood boards 2 naturally substantially coincides with the lateral direction of the trailer 18, in which direction the forces tending to cause the cargo to move or slide on the flooring 24 in the cargo space 29 are typically much weaker. Also the reliable fastening of the cargo with load binders is relatively easy in the lateral direction of the trailer 18.

Now, when the primary main direction P of the plywood boards 2 substantially coincides with the longitudinal direction of the trailer 18, the higher frictional properties of the top surface 1' of the plywood boards 2 in the longitudinal direction of the trailer 18 prevent the cargo loaded on the flooring 24 of the cargo space 29 from moving or sliding along the flooring 24 during fast speed changes. Thus, the higher frictional properties of the flooring 24 in the longitudinal direction of the trailer 18 at least partly compensate for a possibly weaker fastening of the cargo in the longitudinal direction of the trailer 18. The lower frictional properties of the flooring 24 in the lateral direction of the trailer 18, in turn, allow the cargo to move or slide substantially easily along the flooring 24 when the cargo is to be loaded or unloaded through a side of the trailer 18. The lower frictional properties of the flooring 24 in the lateral direction of the trailer 18 do not, however, cause any significant problem because, as stated above, the forces tending to cause the cargo to move or slide on the flooring 24 in the cargo space 29 in the lateral direction of the trailer 18 during use of the trailer are typically much weaker, and because the reliable fastening of the cargo with load binders is relatively easy in the lateral direction of the trailer 18.

In the embodiment of Figure 6, all the plywood boards 2 in the flooring 24 are thus plywood boards 2 wherein the friction coefficient of the top surface 1' of the plywood boards 2 in the primary main direction P is at least 1.2 times the friction coefficient of the top surface 1' in the secondary main direction S. It is, however, possible that only some of the plywood boards 2 in the flooring 24 are plywood boards 2 wherein the friction coefficient of the top surface 1' of the plywood boards 2 in the primary main direction S is at least 1.2 times the friction coefficient of the top surface 1' in the secondary main direction S, whereby the rest of the plywood boards in the flooring may be conventional plywood boards having similar frictional properties in all directions of the board in the plane of the surfaces of the boards.

Figure 7 shows schematically a top view of a loading arrangement in connection with the trailer 18 of Figures 5 and 6. The loading arrangement of Figure 7 comprises the trailer 18 comprising the cargo space 29 provided with the flooring 24. The flooring 24 comprises plywood boards 2 having a primary main direction P and a secondary main direction S in the plane of the top surface 1' wherein the friction coefficient of the top surface 1' of the plywood boards 2 in the primary main direction P is at least 1.2 times the friction coefficient of the top surface 1' in the secondary main direction S. The loading arrangement of Figure 7 also comprises a cargo loaded on the flooring in the cargo space, the cargo comprising a number of large boxes 33 placed for example on loading pallets made of wood (not shown). Further, the loading arrangement of Figure 7 also comprises load binders 34 or webbing straps 34 for supporting or fastening the cargo in the cargo space 29 after the load binders 34 have been tightened in connection with the cargo. The load binders 34 are arranged to run substantially in the secondary main direction S of the plywood boards 2 when they are tightened to support the cargo loaded in the cargo space 29. Ends of the load binders 34 may be fastened for example to the longitudinal side beams 31 of the trailer 18.

In the embodiment shown in Figures 6 and 7, the plywood boards are thus arranged in the flooring of the freight transport unit in such a way that the primary main direction of the plywood boards coincides with the main movement direction of the freight transport means in which the freight transport unit is arranged. It is, however, possible that the secondary main direction of the plywood boards or plywood is arranged to coincide with the main movement direction of the freight transport means in which the freight transport unit is arranged, if the forces tending to cause the cargo to move in the cargo space are greater in a direction transverse to the main movement direction of the freight transport means and/or if the fastening of the cargo in the direction transverse to the main movement direction of the freight transport means cannot be provided as reliably as in the main movement direction of the freight transport means for example because to the structures contribute to define the cargo space.

According to an embodiment, the plywood boards are attached to a frame structure of a freight transport means or a freight transport unit of a freight transport means with an adhesive. When an adhesive, instead of screws, is used for attaching the plywood boards, local variations in the frictional properties of the flooring caused by the screw locations can be avoided. At the same time the surface of the flooring remains undamaged, preventing any moisture from entering an internal structure of the boards.

According to an embodiment, the plywood boards are attached to the frame structure of the freight transport means or the freight transport unit of the freight transport means, in the flooring of the cargo space, in such a way that the top surface of the plywood boards, including the highest point in the top surface of the plywood boards, remains below the top surface of the longitudinal side beams. In this way, the edges of the plywood boards remain undamaged if the cargo to be loaded into the cargo space is moved or slid along the top surface of the longitudinal side beams and along the flooring of the cargo space when being loaded through the side of the cargo space. If the longitudinal main beams are visible, the top surfaces of the longitudinal main beams are at most at the same level as the top surfaces of the plywood boards. Also, if the longitudinal main beams are visible, the top surfaces of the longitudinal main beams may also be treated to have the same kind of frictional properties as the top surfaces of the plywood boards have.

It will be obvious to a person skilled in the art that, as technology advances, the inventive concept can be implemented in various ways. The invention and its embodiments are not limited to the examples described above but may vary within the scope of the claims.

## Claims

1. Plywood comprising a top surface and a bottom surface and having a primary main direction and a secondary main direction in the plane of the surfaces, the secondary main direction being perpendicular to the primary main direction, and wherein at least the top surface is coated with a coating material and wherein at least in the top surface of the plywood a friction coefficient of the surface in the primary main direction is at least 1.2 times a friction coefficient of the surface in the secondary main direction.

2. Plywood according to claim 1, wherein the friction coefficient of the top surface in the primary main direction is at most 5 times the friction coefficient of the top surface in the secondary main direction.

3. Plywood according to claim 1 or 2, wherein the friction coefficient of the top surface in the primary main direction is at least 1.3 times the friction coefficient of the top surface in the secondary main direction and at most 4 times the friction coefficient of the top surface in the secondary main direction.

4. Plywood according to any one of the preceding claims, wherein the friction coefficient of the top surface in the primary main direction is at least 0.50 or at least 0.60.

5. Plywood according to any one of the preceding claims, wherein the friction coefficient of the top surface in the primary main direction is at least 0.40 and the friction coefficient of the top surface in the secondary main direction is at least 0.20.

6. Plywood according to any one of the preceding claims, wherein at least the top surface of the plywood comprises frictional particles comprising edges of different areas spread on the top surface, the frictional particles being oriented to have edges with larger areas facing towards the primary main direction of the plywood.

7. Plywood according to claim 6, wherein the frictional particles are electrostatically chargeable particles or at least partly magnetic particles.

8. Plywood according to any one of the preceding claims, wherein the thickness of the plywood is at least 8 millimetres.

9. Plywood according to any one of the preceding claims, wherein the bottom surface of the plywood is coated with a coating material similar to the coating material on the top surface of the plywood.

10. A method for manufacturing plywood comprising a top surface and a bottom surface, the plywood having a primary main direction and a secondary main direction in the plane of the surfaces, the secondary main direction being perpendicular to the primary main direction, the method comprising
laying veneers of wood material on top of the other for providing a number of successive veneer layers, each veneer layer comprising at least one veneer,
applying an adhesive between the veneer layers,
applying a coating material on at least the top surface of the plywood, and
pressing the veneer layers together,
wherein at least the top surface of the plywood is provided to have in the primary main direction a friction coefficient of at least 1.2 times a friction coefficient of the top surface in the secondary main direction.

11. A method according to claim 10, wherein the top surface of the plywood is provided to have in the primary main direction the friction coefficient of at most 5 times the friction coefficient of the top surface in the secondary main direction.

12. A method according to claim 10 or 11, wherein the top surface of the plywood is provided to have the friction coefficient of at least 0.50 or at least 0.60 in the primary main direction and the friction coefficient of at least 0.20 in the secondary main direction.

13. A method according to any one of the preceding claims 10 to 12, wherein
frictional particles comprising edges of different areas are spread on the top surface of the plywood and
the frictional particles are oriented to have edges with larger areas facing towards the primary main direction of the plywood.

14. A method according to claim 13, wherein the frictional particles are at least partly magnetical particles and
the at least partly magnetical particles are subjected to an effect of a magnetic field for orienting the edges with larger areas to face towards the primary main direction of the plywood.

15. A freight transport means or a freight transport unit of a freight transport means comprising at least one cargo space provided with a flooring, the flooring comprising at least one plywood board made of plywood according to any one of the preceding claims 1 to 9.

16. A loading arrangement of a freight transport means or a freight transport unit of the freight transport means, the loading arrangement comprising
a freight transport means or a freight transport unit of a freight transport means comprising at least one cargo space provided with a flooring, the flooring comprising at least one plywood board made of plywood according to any one of the preceding claims 1 to 9,
a cargo loaded on the flooring in the cargo space and
load binders for supporting the cargo in the cargo space after tightening the load binders in connection with the cargo,
wherein the load binders are arranged to run substantially in the secondary main direction of the plywood when tightened to support the cargo loaded in the cargo space.

17. A flooring for a cargo space of a freight transport means or a freight transport unit of the freight transport means, which flooring is to be fastened to a frame structure of the freight transport means or the freight transport unit of the freight transport means, wherein the flooring comprises at least one plywood board made of plywood according to any one of the preceding claims 1 to 9.

## Patentansprüche

1. Sperrholz, das eine obere Fläche und eine untere Fläche aufweist und eine primäre Hauptrichtung und eine sekundäre Hauptrichtung in der Ebene der Flächen hat, welche sekundäre Hauptrichtung senkrecht zur primären Hauptrichtung ist, und wobei zumindest die obere Fläche mit einem Beschichtungsmaterial beschichtet ist und wobei zumindest in der oberen Fläche des Sperrholzes der Reibungskoeffizient der Fläche in der primären Hauptrichtung zumindest das 1,2-Fache des Reibungskoeffizienten der Fläche in der sekundären Hauptrichtung ist.

2. Sperrholz nach Patentanspruch 1, wobei der Reibungskoeffizient der oberen Fläche in der primären Hauptrichtung höchstens das 5-Fache des Reibungskoeffizienten der oberen Fläche in der sekundären Hauptrichtung ist.

3. Sperrholz nach Patentanspruch 1 oder 2, wobei der Reibungskoeffizient der oberen Fläche in der primären Hauptrichtung zumindest das 1,3-Fache des Reibungskoeffizienten der oberen Fläche in der sekundären Hauptrichtung ist und höchstens das 4-Fache des Reibungskoeffizienten der oberen Fläche in der sekundären Hauptrichtung ist.

4. Sperrholz nach einem der vorhergehenden Patentansprüche, wobei der Reibungskoeffizient der oberen Fläche in der primären Hauptrichtung zumindest 0,50 oder zumindest 0,60 ist.

5. Sperrholz nach einem der vorhergehenden Patentansprüche, wobei der Reibungskoeffizient der oberen Fläche in der primären Hauptrichtung zumindest 0,40 ist und der Reibungskoeffizient der oberen Fläche in der sekundären Hauptrichtung zumindest 0,20 ist.

6. Sperrholz nach einem der vorhergehenden Patentansprüche, wobei zumindest die obere Fläche des Sperrholzes auf der oberen Fläche verteilte Reibungspartikel aufweist, die Ränder mit unterschiedlichen Bodenflächen aufweisen, welche Reibungspartikel derart ausgerichtet sind, dass Ränder mit größeren Bodenflächen der primären Hauptrichtung des Sperrholzes zugekehrt sind.

7. Sperrholz nach Patentanspruch 6, wobei die Reibungspartikel elektrostatisch aufladbare Partikel oder zumindest teilweise magnetische Partikel sind.

8. Sperrholz nach einem der vorhergehenden Patentansprüche, wobei die Dicke des Sperrholzes zumindest 8 Millimeter beträgt.

9. Sperrholz nach einem der vorhergehenden Patentansprüche, wobei die untere Fläche des Sperrholzes mit einem Beschichtungsmaterial beschichtet ist, das ähnlich wie das Beschichtungsmaterial auf der oberen Fläche des Sperrholzes ist.

10. Verfahren zur Herstellung von Sperrholz, das eine obere Fläche und eine untere Fläche aufweist, welches Sperrholz eine primäre Hauptrichtung und eine sekundäre Hauptrichtung in der Ebene der Flächen hat, welche sekundäre Hauptrichtung senkrecht zur primären Hauptrichtung ist, bei welchem Verfahren
Furniere aus Holzmaterial aufeinander gelegt werden, um eine Anzahl von aufeinander folgenden Furnierschichten bereitzustellen, wobei jede Furnierschicht zumindest ein Furnier aufweist,
ein Klebmittel zwischen die Furnierschichten aufgebracht wird,
ein Beschichtungsmaterial auf zumindest die obere Fläche des Sperrholzes aufgebracht wird und
die Furnierschichten zusammengedrückt werden,
wobei zumindest die obere Fläche des Sperrholzes vorgesehen ist, in der primären Hauptrichtung einen Reibungskoeffizienten von zumindest das 1,2-Fache des Reibungskoeffizienten der oberen Fläche in der sekundären Hauptrichtung zu haben.

11. Verfahren nach Patentanspruch 10, wobei die obere Fläche des Sperrholzes vorgesehen ist, in der primären Hauptrichtung einen Reibungskoeffizienten von höchstens das 5-Fache des Reibungskoeffizienten der oberen Fläche in der sekundären Hauptrichtung zu haben.

12. Verfahren nach Patentanspruch 10 oder 11, wobei die obere Fläche des Sperrholzes vorgesehen ist, einen Reibungskoeffizienten von zumindest 0,50 oder zumindest 0,60 in der primären Hauptrichtung und einen Reibungskoeffizienten von zumindest 0,20 in der sekundären Hauptrichtung zu haben.

13. Verfahren nach einem der vorhergehenden Patentansprüche 10 bis 12, wobei
Reibungspartikel, die Ränder mit unterschiedlichen Bodenflächen aufweisen, auf die obere Fläche des Sperrholzes verteilt werden und
die Reibungspartikel derart ausgerichtet werden, dass ihre Ränder mit größeren Bodenflächen der primären Hauptrichtung des Sperrholzes zugekehrt sind.

14. Verfahren nach Patentanspruch 13, wobei die Reibungspartikel zumindest teilweise magnetische Partikel sind und
die zumindest teilweise magnetischen Partikel einer Wirkung eines Magnetfelds ausgesetzt werden, um die Ränder mit größeren Bodenflächen derart auszurichten, dass sie der primären Hauptrichtung des Sperrholzes zugekehrt sind.

15. Frachttransportmittel oder Frachttransporteinheit eines Frachttransportmittels, das/die zumindest einen Lastraum mit einem Fußboden aufweist, welcher Fußboden zumindest eine Sperrholzplatte aufweist, die aus Sperrholz nach einem der vorhergehenden Patentansprüche 1 bis 9 besteht.

16. Ladeanordnung eines Frachttransportmittels oder einer Frachttransporteinheit des Frachttransportmittels, welche Ladeanordnung umfasst:
ein Frachttransportmittel oder eine Frachttransporteinheit eines Frachttransportmittels, das/die zumindest einen Lastraum mit einem Fußboden aufweist, welcher Fußboden zumindest eine Sperrholzplatte aufweist, die aus Sperrholz nach einem der vorhergehenden Patentansprüche 1 bis 9 besteht,
eine Last, die auf den Fußboden im Lastraum geladen ist, und
Lastbindemittel zur Stützung der Last im Lastraum, nachdem die Lastbindemittel in Verbindung mit der Last angespannt worden sind,
wobei die Lastbindemittel angeordnet sind, wesentlich in der sekundären Hauptrichtung des Sperrholzes zu verlaufen, wenn sie angespannt werden, um die in den Lastraum geladene Last zu stützen.

17. Fußboden für einen Lastraum eines Frachttransportmittels oder einer Frachttransporteinheit des Frachttransportmittels, welcher Fußboden an einer Rahmenstruktur des Frachttransportmittels oder der Frachttransporteinheit des Frachttransportmittels zu befestigen ist, wobei der Fußboden zumindest eine Sperrholzplatte aufweist, die aus Sperrholz nach einem der vorhergehenden Patentansprüche 1 bis 9 besteht.

## Revendications

1. Contreplaqué comprenant une surface supérieure et une surface inférieure et présentant une direction principale primaire et une direction principale secondaire dans le plan des surfaces, la direction principale secondaire étant perpendiculaire à la direction principale primaire, et dans lequel la surface supérieure au moins est revêtue d'un matériau de revêtement, et dans lequel au moins dans la surface supérieure du contreplaqué, le coefficient de frottement de la surface dans la direction principale primaire est au moins égal à 1,2 fois le coefficient de frottement de la surface dans la direction principale secondaire.

2. Contreplaqué selon la revendication 1, dans lequel le coefficient de frottement de la surface supérieure dans la direction principale primaire est tout au plus égal à 5 fois le coefficient de frottement de la surface supérieure dans la direction principale secondaire.

3. Contreplaqué selon la revendication 1 ou la revendication 2, dans lequel le coefficient de frottement de la surface supérieure dans la direction principale primaire est au moins égal à 1,3 fois le coefficient de frottement de la surface supérieure dans la direction principale secondaire et tout au plus égal à 4 fois le coefficient de frottement de la surface supérieure dans la direction principale secondaire.

4. Contreplaqué selon l'une quelconque des revendications précédentes, dans lequel le coefficient de frottement de la surface supérieure dans la direction principale primaire est au moins égal à 0,50 ou au moins égal à 0,60.

5. Contreplaqué selon l'une quelconque des revendications précédentes, dans lequel le coefficient de frottement de la surface supérieure dans la direction principale primaire est au moins égal à 0,40, et le coefficient de frottement de la surface supérieure dans la direction principale secondaire est au moins égal à 0,20.

6. Contreplaqué selon l'une quelconque des revendications précédentes, dans lequel la surface supérieure au moins du contreplaqué comprend des particules de friction qui comprennent des bords de différentes surfaces dispersées sur la surface supérieure, les particules de friction étant orientées de façon à présenter des bords avec de plus grandes surfaces qui font face vers la direction principale primaire du contreplaqué.

7. Contreplaqué selon la revendication 6, dans lequel les particules de friction sont des particules qui peuvent être chargées de manière électrostatique, ou des particules magnétiques en partie au moins.

8. Contreplaqué selon l'une quelconque des revendications précédentes, dans lequel l'épaisseur du contreplaqué est au moins égale à 8 millimètres.

9. Contreplaqué selon l'une quelconque des revendications précédentes, dans lequel la surface inférieure du contreplaqué est revêtue avec un matériau de revêtement similaire au matériau de revêtement présent sur la surface supérieure du contreplaqué.

10. Procédé destiné à fabriquer un contreplaqué qui comprend une surface supérieure et une surface inférieure, le contreplaqué présentant une direction principale primaire et une direction principale secondaire dans le plan des surfaces, la direction principale secondaire étant perpendiculaire à la direction principale primaire, le procédé comprenant les étapes consistant à :
disposer des plis de matériau de bois les uns sur les autres de façon à obtenir un certain nombre de couches de plis successives, chaque couche de plis comprenant au moins un pli ;
appliquer un adhésif entre les couches de plis ;
appliquer un matériau de revêtement au moins sur la surface supérieure du contreplaqué ; et
presser ensemble les couches de plis ;
dans lequel la surface supérieure au moins du contreplaqué est prévue de façon à présenter, dans la direction principale primaire, un coefficient de frottement au moins égal à 1,2 fois le coefficient de frottement de la surface supérieure dans la direction principale secondaire.

11. Procédé selon la revendication 10, dans lequel la surface supérieure du contreplaqué est prévue de façon à présenter, dans la direction principale primaire, un coefficient de frottement tout au plus égal à 5 fois le coefficient de frottement de la surface supérieure dans la direction principale secondaire.

12. Procédé selon la revendication 10 ou la revendication 11, dans lequel la surface supérieure du contreplaqué est prévue de façon à présenter un coefficient de frottement au moins égal à 0,50 ou au moins égal à 0,60 dans la direction principale primaire, et un coefficient de frottement au moins égal à 0,20 dans la direction principale secondaire.

13. Procédé selon l'une quelconque des revendications précédentes 10 à 12, dans lequel :
des particules de friction qui comprennent des bords de différentes surfaces sont dispersées sur la surface supérieure du contreplaqué ; et
les particules de friction sont orientées de façon à présenter des bords avec de plus grandes surfaces qui font face vers la direction principale primaire du contreplaqué.

14. Procédé selon la revendication 13, dans lequel les particules de friction sont des particules magnétiques en partie au moins ; et
les particules magnétiques en partie au moins sont soumises à l'effet d'un champ magnétique de façon à orienter les bords avec de plus grandes surfaces de manière à faire face vers la direction principale primaire du contreplaqué.

15. Moyens de transport de frets ou unité de transport de frets de moyens de transport de frets, comprenant au moins un espace de chargement doté d'un plancher, le plancher comprenant au moins un panneau de contreplaqué réalisé dans le contreplaqué selon l'une quelconque des revendications précédentes 1 à 9.

16. Agencement de chargement de moyens de transport de frets ou d'une unité de transport de frets de moyens de transport de frets, l'agencement de chargement comprenant :
des moyens de transport de frets ou une unité de transport de frets de moyens de transport de frets, comprenant au moins un espace de chargement doté d'un plancher, le plancher comprenant au moins un panneau de contreplaqué réalisé dans le contreplaqué selon l'une quelconque des revendications précédentes 1 à 9 ;
un chargement chargé sur le plancher dans l'espace de chargement ; et
des tendeurs d'attache de charge destinés à supporter le chargement dans l'espace de chargement après avoir serré les tendeurs d'attache de charge avec le chargement ;
dans lequel les tendeurs d'attache de charge sont agencés de façon à fonctionner sensiblement dans la direction principale secondaire du contreplaqué une fois qu'ils ont été serrés de façon à supporter le chargement chargé dans l'espace de chargement.

17. Plancher d'un espace de chargement de moyens de transport de frets ou d'une unité de transport de frets de moyens de transport de frets, lequel plancher doit être fixé à une structure de cadre des moyens de transport de frets ou de l'unité de transport de frets des moyens de transport de frets, dans lequel le plancher comprend au moins un panneau de contreplaqué réalisé dans le contreplaqué selon l'une quelconque des revendications précédentes 1 à 9.
